# EUROPÄISCHE PATENTSCHRIFT

(11) **EP 0 584 862 B1**
(45) Veröffentlichungstag und Bekanntmachung des Hinweises auf die Patenterteilung: **27.05.1998**
(21) Anmeldenummer: 93202373.2
(22) Anmeldetag: 13.08.1993
(51) Int. Cl.: H04J 3/04

(54) **Anordnung zur Erzeugung eines Multiplexsignals**
Multiplexing arrangement
Dispositif de multiplexage

(30) Priorität: 20.08.1992 DE 4227496
(43) Veröffentlichungstag der Anmeldung: 02.03.1994
(73) Patentinhaber: LUCENT TECHNOLOGIES INC., Murray Hill, New Jersey 07974-0636 (US)
(72) Erfinder: Behrens, Michael, Dr., D-20097 Hamburg (DE); Siebke, Michael, D-20097 Hamburg (DE)
(74) Vertreter: Johnston, Kenneth Graham

(56) Entgegenhaltungen:
- PATENT ABSTRACTS OF JAPAN vol. 10, no. 370 (E-460)10. Dezember 1986 & JP-A-61 164 351 (OKI ELECTRIC IND CO LTD)
- PATENT ABSTRACTS OF JAPAN vol. 11, no. 51 (E-480)(2498) 17. Februar 1987 & JP-A-61 214 635 (FUJITSU LTD) 24. September 1986

## Beschreibung

Die Erfindung betrifft eine Anordnung zum Zusammenfügen wenigstens zweier Quellsignale zu einem Multiplexsignal, wobei die Quellsignale aus unabhängig voneinander arbeitenden Qellbausteinen an einen Multiplexbaustein übertragen werden, in welchem sie in vorgegebener Weise zu dem Multiplexsignal zusammengefügt werden.

Beim Zusammensetzen mehrerer Quellsignale zu einem Multiplexsignal müssen die Quellsignale in der Phasenlage synchronisiert werden, auf die Zielfrequenz umgesetzt werden und in vorgegebener Reihenfolge zusammengefügt werden. Diese Problematik taucht beispielsweise bei der synchronen digitalen Hierarchie auf. Diese Aufgabe wird gegebenenfalls noch dadurch erschwert, daß die Quellbausteine, die die Quellsignale liefern, unabhängig voneinander arbeiten und deren Ausgangssignale in einem anderen Baustein zu einem Multiplexsignal zusammengefügt werden müssen.

Nach dem Stande der Technik wird diese Aufgabe meist durch ein sogenanntes Master-Slave-Verfahren gelöst, wobei einer der Bausteine, meist der Multiplex-Baustein, zum Master über die anderen Bausteine wird und diese steuert. Zur Vermeidung des Einsatzes eines externen Steuerkreises ist es aus der JP-A 61 164 351 auch bekannt, mittels elastischer Speicherkreise Schreib-/Lesesignale von m-bit-Daten zu identifizieren und an den jeweils nächsten elastischen Speicherkreis zu übermitteln.

Es ist Aufgabe der Erfindung, eine Anordnung der eingangs genannten Art zu schaffen, welche die Problematik des Zusammenfügens der Quellsignale ohne Einsatz eines Masters löst.

Diese Aufgabe wird erfindungsgemäß dadurch gelöst, daß jeder Quellbaustein wenigstens einen Speicher, einen Schreib- und einen Lesezähler aufweist, wobei die Zähler unabhängig voneinander arbeiten und die Adressen beim Ein- bzw. Auslesen von Daten in den bzw. aus dem Speicher generieren, daß die in Rahmen strukturierten Quellsignale mit dem Beginn eines neuen Rahmens ab einer vorgegebenen Anfangsadresse des Speichers abgespeichert werden und die Speicher-Adresse des Endes des Rahmens mittels eines Markierungsbits markiert wird, daß die Quellsignale aus dem Speicher der Quellbausteine in Abhängigkeit eines von dem Multiplexbaustein gelieferten Taktsignals ausgelesen und an den Multiplexbaustein übertragen werden, daß jeder Quellbaustein ein Rücksetzsignal liefert, nachdem beim Auslesen eines Rahmens die markierte Adresse ausgelesen wurde und daß jedes von einem Quellbaustein gelieferte Rücksetzsignal die Lesezähler aller Quellbausteine auf die vorgegebene Anfangsadresse setzt.

Die Quellbausteine, die unabhängig voneinander arbeiten, weisen je einen Schreib- und einen Lesezähler auf. Die Schreibzähler der Quellbausteine sind in ihrem Takt angepaßt an das Eingangssignal der Quellbausteine, also die ursprünglichen Quellsignale. Diese Signale, bei denen es sich beispielsweise um solche der Synchronen Digitalen Hierarchie handeln kann, können gegebenenfalls zueinander nicht synchronisiert sein. Innerhalb eines Quellbausteins arbeiten auch die Schreib- bzw. Lesezähler unabhängig voneinander.

Die Quellsignale werden in den Speicher eines jeden Quellbausteins in ganz bestimmter Weise geschrieben, wobei eine Orientierung an der Struktur der Quellsignale stattfindet, die beispielsweise im Fall der Synchronen Digitalen Hierarchie in Rahmen strukturiert sind.

Es wird mit Beginn jedes neuen Rahmens ab einer bestimmten Anfangsadresse des Speichers der nachfolgende Rahmen abgespeichert. Das Ende des Rahmens bzw. die entsprechende Speicheradresse in dem Speicher wird mittels eines Markierungsbits markiert. Es steht somit jederzeit fest, in welchem Bereich des Speichers ein Rahmen abgespeichert ist. Die Anfangsadresse liegt ohnehin fest; die Endadresse ist durch das Markierungsbit angegeben.

Somit ist beim Auslesen eines Quellsignals aus einem Speicher eines Quellbausteins bekannt, welchen Wertebereich der Lesezähler des Quellbausteins beim Auslesen der Daten aus dem Speicher überstreichen muß.

Das Auslesen der Signale aus dem Speicher des Quellbausteins geschieht in Abhängigkeit eines von dem Multiplexbaustein gelieferten Taktsignals. Dieser Auslesevorgang ist also unabhängig von dem Takt des Einlesevorgangs in einen jeden Quellbaustein.

Damit die einzelnen Quellbausteine bzw. die in ihnen stattfindenden Auslesevorgänge aus ihren Speichern zueinander koordiniert ablaufen, ist ferner vorgesehen, daß jeder Quellbaustein, der beim Auslesen die markierte Adresse erreicht, ein Rücksetzsignal liefert. Dieses Rücksetzsignal wird sowohl in dem Quellbaustein, in dem es erzeugt wurde, wie auch in allen anderen Quellbausteinen, dazu eingesetzt, die Lesezähler der Quellbausteine auf die vorgegebene Anfangsadresse zu setzen.

Mit diesen Maßnahmen wird erreicht, daß ein Phasenversatz der Quellsignale ausgeglichen wird, daß ferner eine Anpassung an unterschiedliche Übertragungsfrequenzen stattfindet und daß eine automatische Überwachung auf Synchronisationsverlust erfolgt. Ferner wird hierdurch eine automatische Initialisierung bei Anlauf der Anordnung erreicht. Diese Vorteile ergeben sich insbesondere dadurch, daß durch das Rücksetzen aller Quellbausteine schon dann, wenn in einem Quellbaustein das Markierungsbit erreicht wird, die Quellbausteine quasi zwangsweise aufsynchronisiert werden. Entsprechendes gilt bei der Initialisierung, bei der die Zähler im Prinzip in beliebiger Stellung sein können; es werden dann, wenn der erste Lesezähler der Quellbausteine eine Endadresse erreicht hat, alle Quellbausteine bzw. deren Lesezähler an die Anfangsadresse zurückgesetzt.

Gemäß einer Ausgestaltung der Erfindung ist vorgesehen, daß die Speichergröße eines Quellbausteins so ausgelegt ist, daß der Speicher wenigstens einen Rahmen des ihm zugeordneten Quellsignals aufnehmen kann.

Das Schreiben eines Rahmens eines Quellsignals mit dessen Beginn an die vorgegebene Anfangsadresse kann dadurch erleichert werden, daß die Speichergröße so ausgelegt ist, daß sie einen Rahmen faßt. Es ist dann mit Erreichen des Endes der eines Rahmens immer sichergestellt, daß die nächste Adresse wieder die vorgegebene Anfangsadresse ist. Der Speicher des Fifos kann auch größer sein, seine Größe beträgt dann vorteilhaft ein ganzzahliges Vielfaches eines Rahmens.

Die Auslesevorgänge aus den einzelnen Quellbausteinen können vorteilhaft und dadurch gesteuert werden, daß der Multiplexbaustein ein Freigabesignal an die Quellbausteine gibt. Dazu ist nach einer Ausgestaltung der Erfindung vorgesehen, daß der Auslese- und Übertragungsvorgang von Daten aus den Quellbausteinen zu dem Multiplexbaustein zusätzlich durch ein Freigabesignal gesteuert wird, das der Multiplexbaustein für jeden Quellbaustein individuell generiert.

In weiterer Ausgestaltung der Erfindung ist vorgesehen, daß in jedem Quellbaustein zu dem Zeitpunkt, zu dem der Lesezähler auf die vorgegebene Anfangsadresse gesetzt wird, der Wert des Schreibzählers geprüft wird, und daß, wenn der Schreibzähler sich nicht in einem vorgegebenen Adreßbereich befindet, zu dem Zeitpunkt ein Rücksetzsignal erzeugt wird, an dem im richtig synchronisierten Zustand des Quellbausteins das Markierungsbit eingeschrieben werden würde.

Sollte sich zu dem Zeitpunkt, in dem der Lesezähler eines Quellbausteins auf die vorgegebene Anfangsadresse gesetzt wird, der Wert des Schreibzählers nicht in einem bestimmten Wertebereich befinden, so liegt ein Fehlerfall vor; die Synchronität ist verlorengegangen und vermutlich auch ein Teil der zu übertragenden Daten des Quellsignals. In diesem Falle ist es vorteilhaft, nachfolgend eine Aufsynchronisation aller Quellbausteine dadurch vorzunehmen, daß nachfolgend dann ein Rücksetzsignal erzeugt wird, wenn der Zeitpunkt erreicht ist, zu dem bei richtiger Aufsynchronisierung des Quellbausteins das Markierungsbit in den Speicher des Quellbausteins eingeschrieben werden würde. Der Rücksetzvorgang wird also zwangsweise zu dem Zeitpunkt ausgelöst, zu dem bei richtiger Aufsynchronisierung des Quellbausteins bzw. dessen Schreibzählers der Rücksetzvorgang durch das Markierungsbit ausgelöst werden würde.

Bei dem Speicher kann es sich, wie nach weiterer Ausgestaltung der Erfindung vorgesehen ist, vorteilhaft um einen sogenannten First-In-Firt-Out-Speicher (FIFO) handeln; insbesondere durch das zyklische Beschreiben und wieder Auslesen der Daten ist diese Speicheranordnung vorteilhaft.

Die erfindungsgemäße Anordnung kann vorteilhaft für Signale der synchronen digitalen Hierarchie eingesetzt werden. So kann, wie nach weiteren Ausgestaltungen der Erfindung vorgesehen ist, bei dem Multiplexsignal beispielsweise um ein STM-1-Signal der synchronen digitalen Hierarchie handeln. Die Quellsignale können TUG-2- oder TUG-3-Signale der Synchronen Digitalen Hierarchie sein, die zu einem STM-1-Multiplexsignal zusammengefügt werden.

Anhand der Zeichnung wird nachfolgend ein Ausführungsbeispiel der Erfindung näher erläutert. Es zeigen:
Fig. 1 eine Anordnung mit drei Quellbausteinen und einem Multiplexbaustein,
Fig. 2 ein Zeitdiagramm einiger Signale der Anordnung gemäß Fig. 1 für die Übertragung eines Datenbytes von einem Quellbaustein zu dem Multiplexbaustein,
Fig. 3 eine Darstellung gemäß Fig. 2 für die Übertragung mehrerer Bytes und
Fig. 4 ein Quellsignal TUG-3 der Synchronen Digitalen Hierarchie.

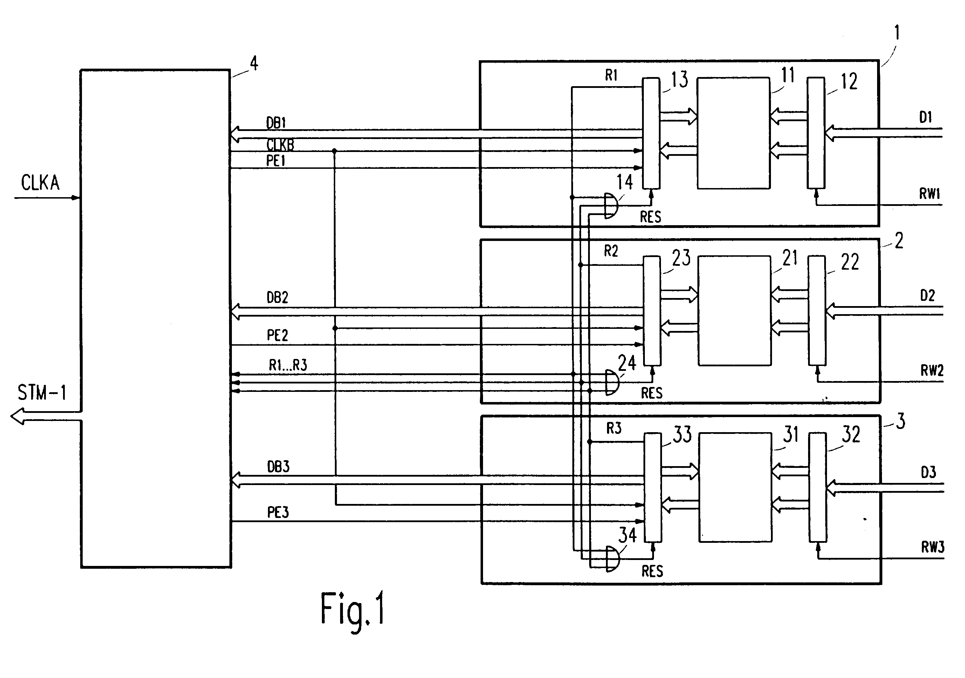

Eine in Fig. 1 dargestellte Anordnung, die insbesondere für Signale der Synchronen Digitalen Hierarchie eingesetzt werden kann, weist drei Quellbausteine 1, 2 und 3 sowie einen Mutliplexbaustein 4 auf.

Dem Quellbaustein 1 wird ein Datensignal D1 zugeführt, welches innerhalb des Quellbausteins 1 an eine Schreib-Logik 12 gelangt, welche insbesondere einen in der Fig. nicht näher dargestellten Schreibzähler enthält. Die Schreib-Logik 12 steuert den Einlesevorgang der Daten D1 in einen Speicher 11 in Abhängigkeit eines Schreib-Steuer-Signals RW1.

Bei dem Speicher 11 des Quellbausteins 1 kann es sich insbesondere um einen sogenannten First-In-First-Out-Speicher (FIFO) handeln, dessen Größe wenigstens so bemessen ist, daß er genau einen Rahmen des Quellsignals D1 aufnehmen kann.

Innerhalb des Quellbausteins 1 ist ferner eine Lese-Logik vorgesehen, welche insbesondere einen in der Fig. 1 nicht näher dargestellten Lesezähler enthält.

Der Lesevorgang aus dem Speicher 11 wird dabei insbesondere gesteuert durch ein Taktsignal CLKB und ein Freigabesignal PE1, welche beide von dem Multiplexbaustein 4 geliefert werden.

Beim Einschreiben der Daten des Quellsignals D1 in den Speicher 11 wird mit Beginn eines neuen Rahmens des Quellsignals D1 dieses immer ab einer vorgegebenen Anfangsadresse des Speichers abgespeichert. Die nachfolgenden Bytes werden sukzessive abgespeichert, bis das Ende des Rahmens erreicht ist. Diese Adresse wird innerhalb des Speichers 11 mittels eines Markierungsbits markiert. Damit ist zunächst sichergestellt, daß ein Rahmen ab einer bestimmten vorgegebenen Anfangsadresse in dem Speicher abgespeichert ist.

Beim Auslesevorgang ist somit bekannt, ab welcher Adresse ein neuer Rahmen in dem Speicher 11 abgespeichert ist. Wird beim Auslesen das Ende des Rahmens erreicht und das Markierungsbit detektiert, so gibt die Lese-Logik 13 ein entsprechendes Signal R1 ab. Dieses Rücksetzsignal wird dazu eingesetzt, sowohl den in der Lese-Logik 13 enthaltenen Lesezähler des Quellbausteins 1, wie auch die Lesezähler der übrigen Quellbausteine auf die markierte Anfangsadresse zurückzusetzen. Damit wird sichergestellt, daß, wenn einer der Lesezähler der Quellbausteine ein Markierungsbit erreicht, nachfolgend alle Lesezähler der Quellbausteine auf ihren Anfangswert zurückgesetzt werden.

Bei der Darstellung gemäß Fig. 1 werden diese Rücksetzsignale aller Quellbausteine innerhalb des Quellbausteins 1 einem ODER-Gatter 14 zugeführt, dessen Ausgangssignal der Schreib-Logik 13 zugeführt wird.

Die Quellbausteine 2 und 3 sind in gleicher Weise aufgebaut wie der Quellbaustein 1; insbesondere erzeugt der Quellbaustein 2 ein Rücksetzsignal R2, der Quellbaustein 3 ein Rücksetzsignal R3. Die Rücksetzsignale R1, R2 und R3 sind in jedem Quellbaustein einem ODER-Gatter 14, 24 bzw. 34 zugeführt, deren Ausgangssignale als Rücksetzsignal RES dem jeweiligen Lesezähler innerhalb der Schreib-Logik des Quellbausteins zugeführt werden.

Die aus den Speichern 11, 21 bzw. 31 der Quellbausteine 1, 2 bzw. 3 zu dem Multiplexbaustein 4 übertragenen Daten sind in der Fig. 1 mit DB1, DB2 bzw. DB3 bezeichnet. Für den Auslesevorgang wird von dem Multiplexbaustein 4 ein gemeinsam für alle Quellbausteine 1, 2 und 3 erzeugtes Taktsignal CLKB zur Verfügung gestellt. Für jeden Quellbaustein individuell wird dagegen ein Freigabesignal PE1, PE2 bzw. PE3 erzeugt. Die oben erläuterten Rücksetzsignale R1, R2 und R3 werden dem Multiplexbaustein 4 ebenfalls zugeführt, damit dieser auf den Rücksetzvorgang entsprechend reagieren kann, insbesondere die Auslesevorgänge entsprechend anpassen kann.

Dem Multiplexbaustein 4 ist von außen ein Taktsignal CLKA zugeführt, das beispielsweise zur Gewinnung des Taktsignals CLKB heruntergeteilt werden kann.

Der Multiplexbaustein 4 liefert seinerseits ein Multiplexsignal, das in der Fig. als Signal STM-1 der Synchronen Digitalen Hierarchie bezeichnet ist. Auch bei den Quellsignalen D1, D2 und D3 kann es sich um Signale der Synchronen Digitalen Hierarchie handeln, insbesondere um TUG-2-Signale oder TUG-3-Signale, die zu einem Multiplexsignal STM-1 zusammengefügt werden.

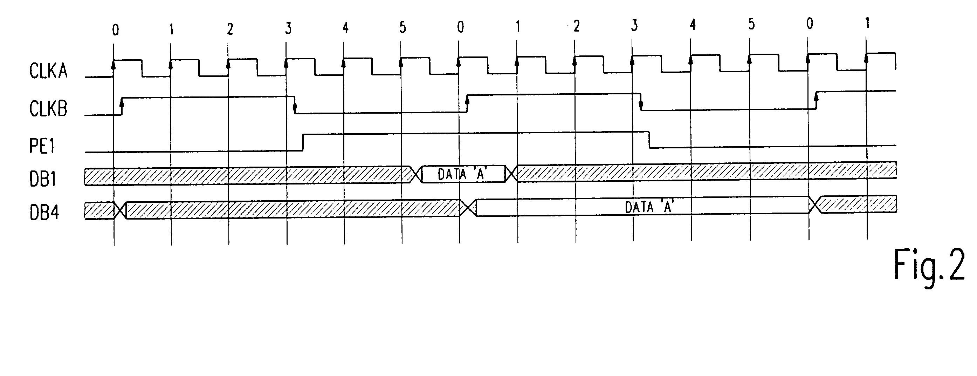

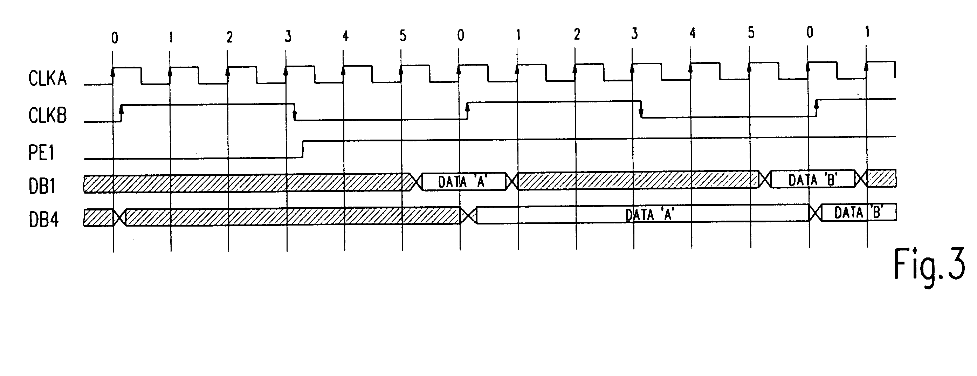

Nachfolgend wird anhand der Darstellungen in den Fig. 2 und 3 der Vorgang einer Datenübertragung von einem der Quellbausteine 1, 2 oder 3 zu dem Multiplexbaustein 4 näher erläutert.

Die Fig. 2 zeigt als ersten über der Zeit aufgetragenen Kurvenzug des Taktsignals CLKA, das in dem Multiplexbaustein 4 heruntergeteilt wird, zu dem als zweiten Kurvenzug aufgetragenen Taktsignals CLKB, das jedem der Quellbausteine 1, 2 und 3 zugeführt wird.

Der dritte Kurvenzug der Darstellung gemäß Fig. 2 zeigt das Freigabesignal PE1, das der Multiplexbaustein 4 an den Quellbaustein 1 liefert. Nach Erscheinen einer Low-High-Flanke des Freigabesignals P1, welches erscheint, während das Taktsignal CLKB Low-Zustand hat, erwartet der Multiplexbaustein 4 mit Erscheinen der nächsten Low-High-Flanke des Taktsignals CLKB einen neuen Datensatz von dem zugeordneten Quellbaustein, in diesem Falle Quellbaustein 1. Daher legt der Quellbaustein 1 bereits vor diesem Zeitpunkt, in der Darstellung gemäß Fig. 2 etwa zwei Takte des Taktsignals CLKA nach Erscheinen der Low-High-Flanke des Freigabesignals PE1, einen neuen Datensatz auf den Datenbus DB1 gemäß Fig. 1. Dies ist in der Darstellung gemäß Fig. 2 in dem vierten Kurvenzug DB1 mit DATA "A" gekennzeichnet. Mit Erscheinen der Low-High-Flanke des Taktsignals CLKB werden diese Daten innerhalb des Mulitplexbausteins 4 übernommen, was in der Darstellung gemäß Fig. 2 mit dem fünften Kurvenzug DB4 angedeutet ist. Soll nachfolgend kein weiterer Datensatz übertragen werden, so setzt der Multiplexbaustein 4 das Signal etwa nach einem Taktzyklus des Signals CLKB nach der Low-High-Flanke des PE1-Signals wieder auf Low, also etwa nach dem nächsten High-Low-Wechsel des Signals CLKB nach dem Anlegen des Datensatzes auf DB1.

Die Darstellung gemäß Fig. 2 zeigt die Übertragung nur eines Datensatzes von dem Quellbaustein 1 zum Multiplexbaustein 4.

Die Darstellung gemäß Fig. 3 zeigt die entsprechende Übertragung, jedoch für mehrere nacheinander übertragende Datensätze, welche in der Fig. 3 mit DATA "A" und DATA "B" gekennzeichnet sind.

Bei der Darstellung gemäß Fig. 3 erfolgt die Übertragung des ersten Datensatzes A in gleicher Weise wie in der Darstellung gemäß Fig. 2. Jedoch bleibt das Freigabesignal PE1 nach Übertragung des ersten Datensatzes A auf High-Pegel. Dies signalisiert den Quellbaustein 1, das nachfolgend ein weiterer Datensatz übertragen werden soll. Dieser wird etwa mit dem zweiten Takt des Signals CLKA nach Erscheinen der nächsten High-Low-Flanke des Taktsignals CLKB zur Verfügung gestellt und wird mit der nächsten Low-High-Flanke des Taktes CLKB von dem Multiplexbaustein 4 übernommen. Dieser Datensatz ist in der Fig. 3 mit DATA "B" gekennzeichnet.

Die nacheinander erfolgende Übertragung weiterer Datensätze würde sich gemäß der Darstellung in Fig. 3 solange fortsetzen, bis das Freigabesignal PE1 nach Übertragung eines Datensatzes und nach einem High-Low-Wechsel des Taktsignals CLKB wieder auf Low-Pegel wechselt, was für den Quellbaustein das Ende der Datenübertragung signalisiert.

Für den Multiplexbaustein ist bei einer Übertragung von Daten gemäß Fig. 2 oder Fig. 3 jederzeit bekannt, um welchen Datensatz, beispielsweise um welches Byte innerhalb eines Rahmens des übertragenen Signales es sich handelt, da der Quellbaustein definiert zurückgesetzt wurde und dieser Rücksetzvorgang über die Signale R1 bis R3 auch dem Multiplexbaustein 4 bekannt ist. Dem Multiplexbaustein 4 ist somit beginnend ab diesem Zeitpunkt bekannt, auf welchem Stand die jeweiligen Lesezähler der Quellbausteine stehen und somit auch, welcher Datensatz übertragen wird. Die in den Fig. 2, 3 beispielhaft angedeutete Übertragung von Daten zwischen dem Quellbaustein 1 und dem Multiplexbaustein 4 findet in entsprechender Weise auch zwischen den Quellbausteinen 2 und dem Multiplexbaustein 4 bzw. dem Quellbaustein 3 und dem Multiplexbaustein 4 statt, wobei die Freigabesignale PE1, PE2 bzw. PE3 jeweils individuell für den jeweiligen Quellbaustein vom Multiplexbaustein 4 erzeugt werden. Auf diese Weise kann der Multiplexbaustein 4 die Datensätze in genau der Weise abrufen, wie er sie zur Zusammensetzung des Multiplexsignals benötigt.

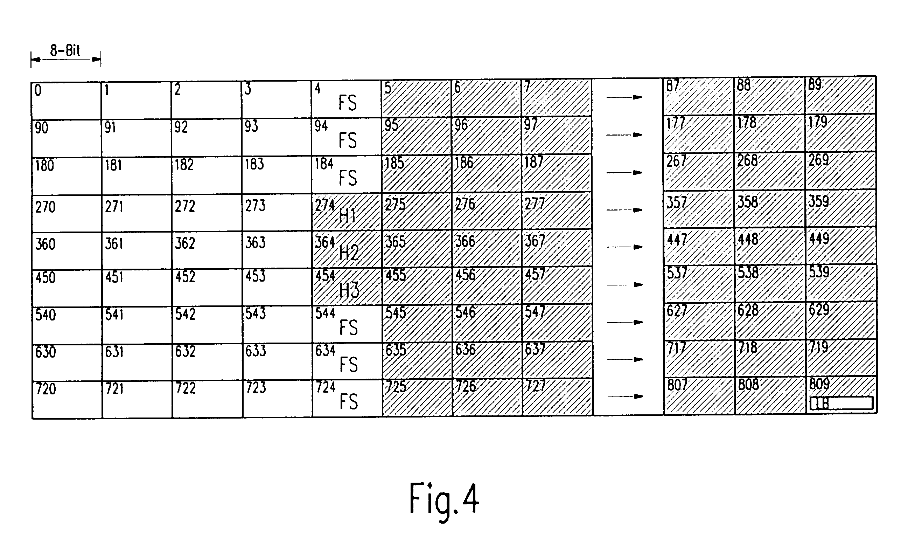

In Fig. 4 ist schematisch ein Rahmen eines Signales TU-3 der Synchronen Digitalen Hierarchie angedeutet. Bei diesem Signal kann es sich beispielsweise um eines der Quellsignale D1, D2 oder D3 handeln. Die in der Darstellung gemäß Fig. 4 schraffierten Bytes des TU-3-Signals sind diejenigen Bytes, die Nutzlast beinhalten und die in dem jeweiligen Speicher 11, 21 oder 31 des Quellbausteins eingeschrieben werden. Das erste Byte dieser Nutzlast, das innerhalb eines Rahmens übertragen wird, wird an eine vorgegebene Anfangsadresse des jeweiligen Speichers 11, 21 oder 31 geschrieben. Mit Erreichen des letzten Bytes, das in der Darstellung gemäß Fig. 4 die Nummer 809 trägt und mit LB bezeichnet ist, wird in dem Speicher ein Markierungsbit geschrieben. Wie oben bereits erläutert, wird beim Lesen dieses Markierungsbit dazu eingesetzt, die Lesezähler aller Quellbausteine nachfolgend zurückzusetzen.

Anstelle des in Fig. 4 angedeuteten TU-3-Signals können selbstverständlich auch andere Signale, beispielsweise TUG-2-Signale als Quellsignale vorliegen; in jedem Falle gilt jedoch, daß bei Erreichen des letzten Bytes des Nutzsignals eines Rahmens in dem Speicher, in dem das Quellsignal abgespeichert wird, ein entsprechendes Markierungsbit gesetzt wird.

## Patentansprüche

1. Anordnung zum Zusammenfügen wenigstens zweier Quellsignale zu einem Multiplexsignal, wobei die Quellsignale aus unabhängig voneinander arbeitenden Quellbausteinen (1, 2, 3) an einen Multiplexbaustein (4) übertragen werden, in welchem sie in vorgegebener Weise zu dem Multiplexsignal zusammengefügt werden,
dadurch gekennzeichnet, daß jeder Quellbaustein (1, 2, 3) wenigstens einen Speicher (11, 21, 31), einen Schreib- und einen Lesezähler aufweist, wobei die Zähler unabhängig voneinander arbeiten und die Adressen beim Ein- bzw. Auslesen von Daten in den bzw. aus dem Speicher (11, 21, 31) generieren, daß die in Rahmen strukturierten Quellsignale mit dem Beginn eines neuen Rahmens ab einer vorgegebenen Anfangsadresse des Speichers (11, 21, 31) abgespeichert werden und die Speicher-Adresse des Endes des Rahmens mittels eines Markierungsbits markiert wird, daß die Quellsignale aus dem Speicher (11, 21, 31) der Quellbausteine in Abhängigkeit eines von dem Multiplexbaustein (4) gelieferten Taktsignals ausgelesen und an den Multiplexbaustein (4) übertragen werden, daß jeder Quellbaustein (1, 2, 3) ein Rücksetzsignal liefert, nachdem beim Auslesen eines Rahmens die markierte Adresse ausgelesen wurde und daß jedes von einem Quellbaustein (1, 2, 3) gelieferte Rücksetzsignal die Lesezähler aller Quellbausteine (1, 2, 3) auf die vorgegebene Anfangsadresse setzt.

2. Anordnung nach Anspruch 1,
dadurch gekennzeichnet, daß die Speichergröße eines Quellbausteins (1, 2, 3) so ausgelegt ist, daß der Speicher (11, 21, 31) wenigstens einen Rahmen des ihm zugeordneten Quellsignals aufnehmen kann.

3. Anordnung nach Anspruch 1 oder 2,
dadurch gekennzeichnet, daß der Auslese- und Übertragungsvorgang von Daten aus den Quellbausteinen (1, 2, 3) zu dem Multiplexbaustein (4) zusätzlich durch ein Freigabesignal gesteuert wird, das der Multiplexbaustein (4) für jeden Quellbaustein (1, 2, 3) individuell generiert.

4. Anordnung nach einem der Ansprüche 1 bis 3,
dadurch gekennzeichnet, daß in jedem Quellbaustein (1, 2, 3) zu dem Zeitpunkt, zu dem der Lesezähler auf die vorgegebene Anfangsadresse gesetzt wird, der Wert des Schreibzählers geprüft wird, und daß, wenn der Schreibzähler sich nicht in einem vorgegebenen Adreßbereich befindet, zu dem Zeitpunkt ein Rücksetzsignal erzeugt wird, an dem im richtig synchronisierten Zustand des Quellbausteins das Markierungsbit eingeschrieben werden würde.

5. Anordnung nach einem der Ansprüche 1 bis 4,
dadurch gekennzeichnet, daß es sich bei den Speichern (11, 21, 31) um First-In-First-Out-Speicher handelt (FIFO).

6. Anordnung nach einem der Ansprüche 1 bis 5,
dadurch gekennzeichnet, daß es sich bei den Quellsignalen und den Multiplexsignalen um Signale der Synchronen Digitalen Hierarchie handelt.

7. Anordnung nach Anspruch 6,
dadurch gekennzeichnet, daß es sich bei dem Multiplexsignal um ein Signal der STM-1-Hierarchie handelt.

8. Anordnung nach einem der Ansprüche 6 oder 7,
dadurch gekennzeichnet, daß es sich bei den Quellsignalen um Signale der TUG-2-Hierarchie oder der TU-3-Hierarchie handelt.

## Claims

1. Arrangement for joining together at least two source signals to form a multiplex signal, the source signals being transmitted from source modules (1, 2, 3), which operate independently of one another, to a multiplexing module (4), in which the said source signals joined together in a predetermined manner form the multiplex signal,
characterized in that each source module (1, 2, 3) has at least one memory (11, 21, 31), a write counter and a read counter, the counters operating independently of one another and generating the addresses when data are read into and out of the memory (11, 21, 31), in that the source signals, structured in frames, are stored with the beginning of a new frame starting at a predetermined start address of the memory (11, 21, 31) and the memory address of the end of the frame is marked by means of a marking bit, in that the source signals are read from the memory (11, 21, 31) of the source modules in dependence on a clock signal supplied by the multiplexing module (4) and are transmitted to the multiplexing module (4), in that each source module (1, 2, 3) supplies a reset eignal after the marked address has been read out during the read-out of a frame, and in that each reset signal supplied by a source module (1, 2, 3) sets the read counters of all the source modules (1, 2, 3) to the predetermined start address.

2. Arrangement according to Claim 1,
characterized in that the memory capacity of a source module (1, 2, 3) is designed such that the memory (11, 21, 31) can hold at least one frame of the source signal assigned to it.

3. Arrangement according to Claim 1 or 2,
characterized in that the operation of reading out and transmitting data from the source modules (1, 2, 3) to the multiplexing module (4) is additionally controlled by an enable signal which is individually generated by the multiplexing module (4) for each source module (1, 2, 3).

4. Arrangement according to one of Claims 1 to 3,
characterized in that the value of the write counter is checked in each source module (1, 2, 3) at the instant at which the read counter is set to the predetermined start address, and in that if the write counter is not in a predetermined address range, a reset signal is generated at the instant at which the marking bit would be written in in the correctly synchronized state of the source module.

5. Arrangement according to one of Claims 1 to 4,
characterized in that the memories (11, 21, 31) are first-in first-out memories (FIFO).

6. Arrangement according to one of Claims 1 to 5,
charactezized in that the source signals and the multiplex signals are synchronous digital hierarchy signals.

7. Arrangement according to Claim 6,
characterized in that the multiplex signal is a signal of the STM-1 hierarchy.

8. Arrangement according to either of Claims 6 and 7,
characterized in that the source signals are signals of the TUG-2 hierarchy or the TU-3 hierarchy.

## Revendications

1. Dispositif pour la réunion d'au moins deux signaux sources en un signal multiplexé, les signaux sources étant transmis, à partir de modules sources (1, 2, 3) fonctionnant indépendamment les uns des autres, à un module de multiplexage (4), dans lequel ils sont réunis en un signal multiplexé de manière prédéfinie,
caractérisé en ce que
chaque module source (1, 2, 3) présente au moins une mémoire (11, 21, 31), un compteur d'écriture et un compteur de lecture, les compteurs fonctionnant indépendamment les uns des autres et générant les adresses lors de l'écriture, respectivement de la lecture de données vers, respectivement à partir de la mémoire (11, 21, 31), en ce que
les signaux sources structurés en trames sont stockés au début d'une nouvelle trame à partir d'une adresse de début prédéfinie de la mémoire (11, 21, 31) et que l'adresse mémoire de la fin de la trame est marquée au moyen d'un bit de marquage, en ce que
les signaux sources sont lus à partir de la mémoire (11, 21, 31) des modules sources en corrélation avec un signal d'horloge délivré par le module de multiplexage (4) et transmis au module de multiplexage (4), en ce que
chaque module source (1, 2, 3) délivre un signal d'initialisation, après que l'adresse marquée ait été lue lors de la lecture d'une trame et en ce que
chaque signal d'initialisation délivré par un module source (1, 2, 3) place les compteurs de lecture de tous les modules source (1, 2, 3) sur l'adresse de début prédéfinie.

2. Dispositif selon la revendication 1, caractérisé en ce que
la taille de la mémoire d'un module source (1, 2, 3) est définie de telle sorte que la mémoire (11, 21, 31) puisse enregistrer au moins une trame du signal source qui lui est affecté.

3. Dispositif selon la revendication 1 ou 2, caractérisé en ce que
le processus de lecture et de transmission de données à partir des modules sources (1, 2, 3) vers le module de multiplexage (4) est piloté de plus par un signal de libération, que le module de multiplexage (4) génère individuellement pour chaque module source (1, 2, 3).

4. Dispositif selon l'une quelconque des revendications 1 à 3, caractérisé en ce que
dans chaque module source (1, 2, 3) la valeur du compteur d'écriture est testée au moment où le compteur de lecture est placé à l'adresse de début prédéfinie, et en ce
qu'un signal d'initialisation est généré si le compteur d'écriture ne se trouve pas dans une zone d'adresse prédéfinie, au moment où le bit de marquage aurait été enregistré dans l'état de synchronisation correct du module source.

5. Dispositif selon l'une quelconque des revendications 1 à 4, caractérisé en ce que
les mémoires (11, 21, 31) sont des mémoires First-In-First-Out (FIFO).

6. Dispositif selon l'une quelconque des revendications 1 à 5, caractérisé en ce que
les signaux sources et les signaux multiplexés sont des signaux de la hiérarchie numérique synchrone.

7. Dispositif selon la revendication 6, caractérisé en ce que
le signal multiplexé est un signal de la hiérarchie SMT-1.

8. Dispositif selon l'une des revendications 6 ou 7, caractérisé en ce que
les signaux sources sont des signaux de la hiérarchie TUG-2 ou de la hiérarchie TUG-3.
